# FASCICULE DE BREVET EUROPEEN

(11) **EP 1 982 915 B1**
(45) Date de publication et mention de la délivrance du brevet: **22.12.2010**
(21) Numéro de dépôt: 08103550.3
(22) Date de dépôt: 15.04.2008
(51) Int. Cl.: B64D 27/26, B64D 29/06

(54) **Suspension souple avec peigne pour turbomoteur**
Elastische Triebwerksbefestigung
Flexible suspension for a turboengine

(30) Priorité: 16.04.2007 FR 0702742
(43) Date de publication de la demande: 22.10.2008
(73) Titulaire: SNECMA, 75015 Paris (FR)
(72) Inventeur: Dron, Sébastien, 94230 Cachan (FR); Fontenoy, Gilles, Lucien, 77000 Livry sur Seine (FR); Tesniere, Marc, Patrick, 91750 Champcueil (FR)
(74) Mandataire: David, Daniel

(56) Documents cités:
- EP-A- 0 250 659
- EP-A- 0 257 665
- EP-A- 0 455 355
- GB-A- 798 832
- US-A- 2 241 139
- US-A- 3 056 569

## Description

La présente invention concerne le domaine des turbomoteurs et vise la suspension de ceux-ci à la structure d'un aéronef.

Un turbomoteur suspendu par exemple à une aile d'avion par l'intermédiaire d'un pylône comprend un point d'attache à l'avant reprenant les efforts transitant par le carter intermédiaire notamment et une attache arrière au niveau du carter d'échappement. Dans une suspension isostatique, les efforts sont transmis par des bielles convenablement distribuées entre les deux organes de fixation et qui travaillent uniquement en traction/compression. Les bielles sont fixées d'une part à une poutre solidaire de la structure de l'avion et d'autre part à des ferrures du carter du moteur. Les fixations des bielles à leurs extrémités sont à rotules de façon à ne permettre la transmission d'efforts que le long de leur axe. Les efforts repris par ces organes de fixation sont le couple moteur et les efforts qui s'exercent dans le plan transversal du moteur comme le poids, les efforts latéraux et la poussée du moteur.

Afin de réduire les vibrations induites sur la structure et le bruit en cabine par le fonctionnement du moteur, il est connu d'introduire des moyens isolateurs de vibrations dans les systèmes de fixation. Par exemple, le brevet EP 250659 décrit une suspension d'un turbomoteur à la structure d'un avion incorporant un axe transversal entre une poutre à laquelle le moteur est suspendu par l'intermédiaire de bielles et le pylône sous l'aile de l'avion. L'axe transversal est supporté par une première paire d'isolateurs à ses extrémités travaillant en compression verticale et une seconde paire travaillant en compression transversale. Les deux paires sont indépendantes l'une de l'autre et peuvent avoir des coefficients d'élasticité différents. Cette solution présente un certain encombrement en hauteur.

D'autres agencements sont connus et sont relativement complexes. Ils sont appliqués généralement aux systèmes de type hyperstatique. Ce type d'accrochage a pour inconvénient principal la non connaissance des efforts transitant dans les pièces à chaque instant. Le dimensionnement des moyens isolateurs dans ce cas est donc plus difficile et incertain.

La présente invention a pour objet la réalisation d'une suspension de turbomoteur dans une structure d'aéronef à la fois de type isostatique et incorporant un élément souple isolateur de vibrations, l'ensemble devant rester aussi compact que possible.

La suspension du turbomoteur conforme à l'invention est défini par les caractéristiques de la revendication principale.

Grâce à la solution de l'invention, on incorpore le moyen amortisseur de vibrations dans la structure de la poutre constituant ainsi un ensemble compact en hauteur, de structure simple et isostatique.

On connaît le brevet EP 257665 qui décrit dans un mode de réalisation particulier, représenté sur les figures 19 à 22, et notamment la figure 22, une suspension comprenant quatre isolateurs de vibrations constitués de plaques parallèles entre elles, liées par une couche d'élastomère, et orientées verticalement parallèlement à l'axe moteur. Le but est d'amortir par cisaillement de l'élastomère les vibrations qui se propagent dans le plan vertical. Cet agencement des isolateurs permet à la suspension de rester relativement rigide dans le plan perpendiculaire à l'axe moteur au regard des efforts transversaux et le couple de rotation. La solution de l'invention se distingue de cet art antérieur par le fait que l'on amortit l'ensemble des vibrations orientées dans le plan transversal avec la possibilité de ménager un maximum de surface active correspondant à toute la surface des plaques formant la poutre, tout en restant très compact en hauteur.

Le document GB 798832 décrit une suspension de turbomoteur comprenant des éléments recevant des moyens de fixation à la structure de l'aéronef et ou moteurs. Les éléments sont reliés par une couche en matériau élastomère mais ne forment pas une poutre.

Le terme pluralité signifie que l'ensemble comprend au moins trois plaques, une plaque centrale reliée à un élément, et deux plaques de part et d'autre de celle-ci reliées à l'autre élément. Le choix du nombre de plaques est déterminé par l'espace dont on dispose pour loger l'ensemble, par les caractéristiques d'amortissement que l'on souhaite obtenir et aussi en fonction des contraintes de production. Notamment, à iso encombrement, on adapte la fabrication de manière à obtenir un nombre de couches d'élastomère et de plaques les plus grands possibles. Si au contraire la place disponible n'est pas une contrainte, on recherchera une solution à coût de fabrication optimal pour un nombre d'éléments maximal.

Les plaques peuvent selon un mode de réalisation avantageux, être réalisées de manière indépendante et boulonnées entre elles.

Conformément à une autre caractéristique, les plaques sont traversées par au moins une tige parallèle à l'axe du moteur, un jeu étant ménagé entre les plaques et la tige. De cette façon, la tige assure la transmission des efforts perpendiculaires à l'axe du moteur quand les premières plaques subissent un déplacement par rapport aux deuxièmes plaques. La poutre comprend une ou deux tiges. Cette ou ces deux tiges assurent la reprise des efforts, notamment en cas de défaillance d'un élément d'amortissement ou en cas de déplacement important. En fait, on prévoit une seule tige lorsque la suspension ne comprend pas de moyen de reprise des efforts liés au couple de rotation du moteur autour de l'axe moteur, ces efforts étant repris par une autre suspension.

Ce mode de réalisation de l'isolation des vibrations convient particulièrement à une suspension de type isostatique dont le moyen de fixation au turbomoteur comprend au moins une bielle articulée par une liaison à rotule sur le second élément de la poutre. En général, la suspension comprend deux bielles pour la reprise des efforts transversaux et une bielle le cas échéant pour la reprise du couple de rotation.

Conformément à une autre caractéristique, la couche d'élastomère entre deux plaques adjacentes est précontrainte. Cette disposition permet au matériau élastomère de ne jamais travailler en dépression.

On décrit maintenant un mode de réalisation non limitatif de l'invention en référence aux dessins annexés sur lesquels
La figure 1 représente une suspension conforme à l'invention vue en perspective,
La figure 2 est une coupe selon la direction II-II de la suspension de la figure 1,
La figure 3 est une vue en coupe selon la direction III-III de la suspension de la figure 1,
La figure 4 montre un ensemble de premières plaques constituant une partie de la suspension de la figure 1,
La figure 5 montre un ensemble de secondes plaques constituant la partie complémentaire de la suspension de la figure 1.

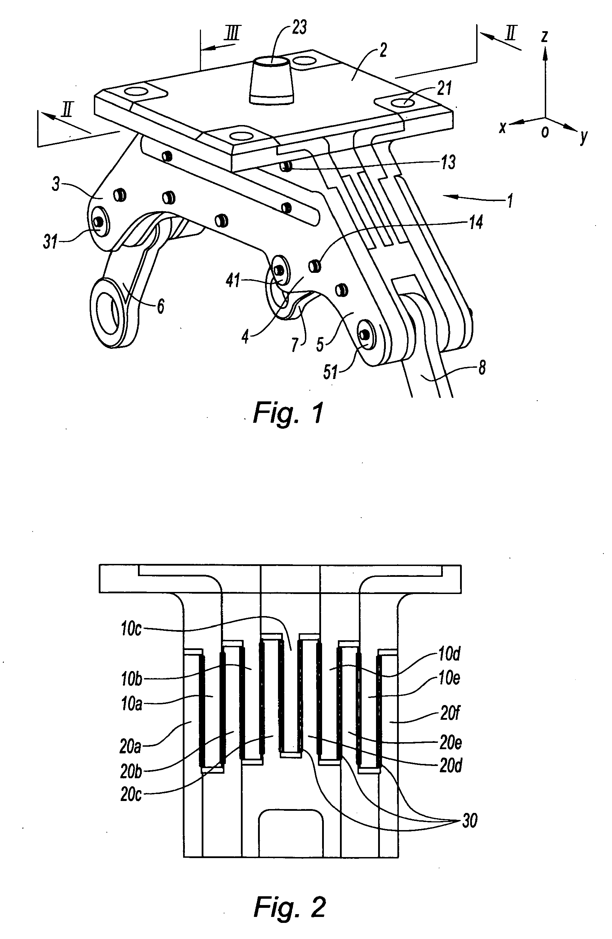

En se reportant à la figure 1, on voit une représentation en perspective cavalière d'une suspension conforme à l'invention et qui constitue un des moyens d'accrochage d'un turbomoteur à la structure d'un aéronef. Le turbomoteur est un turboréacteur ou un turbopropulseur. Il est accroché par exemple sous l'aile d'un avion par l'intermédiaire d'un pylône. Cependant l'invention s'applique à l'accrochage à tout élément de la structure, y compris le fuselage auquel cas la suspension n'est le plus souvent pas verticale mais horizontale pour un accrochage latéral.

La suspension comprend une poutre 1 avec un premier élément qui permet la fixation à la structure de l'aéronef. Le premier élément est constitué selon cet exemple d'une plateforme supérieure 2 de forme rectangulaire ou carrée, percée d'orifices 21 par lesquels la plateforme est fixée à la structure de l'aéronef. La plateforme est fixée à la structure par des moyens de fixations, non visibles, tels que des boulons glissés dans les orifices 21. Un pion central 23 solidaire de la plateforme coopère avec la structure de l'aéronef et assure la reprise des efforts de cisaillement entre la suspension et la structure.

La poutre est de forme générale allongée. Elle se place en travers par rapport à l'axe du moteur. Il s'agit de l'axe OX sur le repère associé à la figure 1. L'axe OZ est l'axe vertical et l'axe OY est transversal. Elle comprend un second élément recevant des moyens de fixation au turbomoteur. Ce second élément est constitué ici par les trois bras 3, 4 et 5 qui s'étendent vers le bas à l'opposé de la plateforme 2. Chacun des bras comprend une fente transversale ouverte vers le bas, et est traversé axialement par un axe 31, 41 et 51 supportant une bielle, respectivement 6, 7 et 8. Les bielles sont articulées sur leur axe par l'intermédiaire d'une liaison à rotule. Cette liaison permet à la bielle de pivoter autour de l'axe 31, 41 et 51, mais aussi selon les deux autres directions dans les limites permises par le jeu ménagé entre la bielle et la fente qui la reçoit.

Le moteur vient s'accrocher à la poutre par l'intermédiaire des bielles 6, 7 et 8 qui comprennent des alésages axiaux pour le passage d'axes non représentés, montés sur des ferrures solidaires du carter du moteur. Les deux bielles 6 et 8 forment un angle entre elles et assurent la reprise des efforts selon les directions OY et OZ. La bielle 7 disposée entre les deux autres reprend, en combinaison avec ces dernières, les efforts liés au couple moteur. Elle peut ne pas être prévue si le couple est repris par une autre suspension.

L'ensemble qui est décrit ci-dessus est classique et fait partie de l'art antérieur.

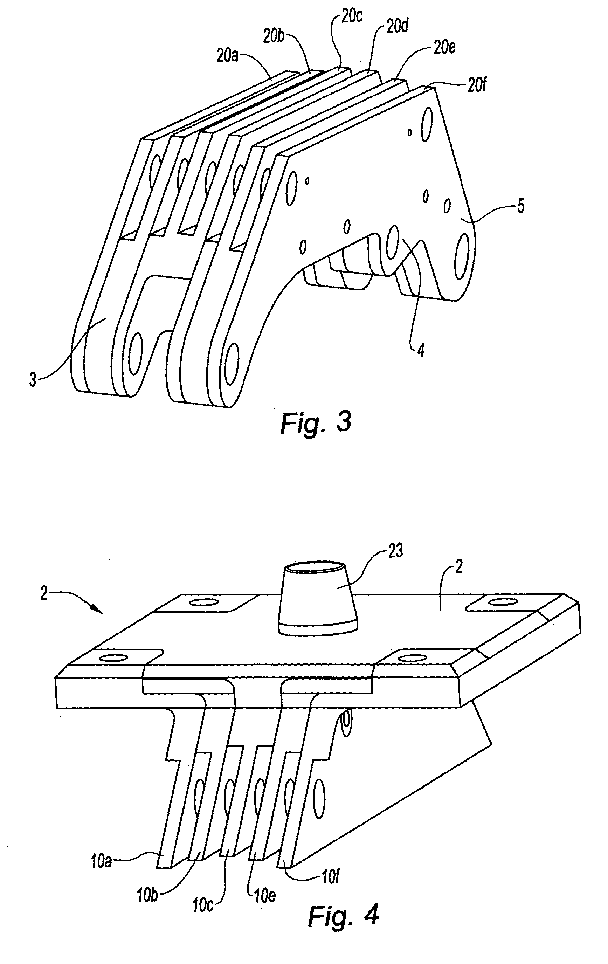

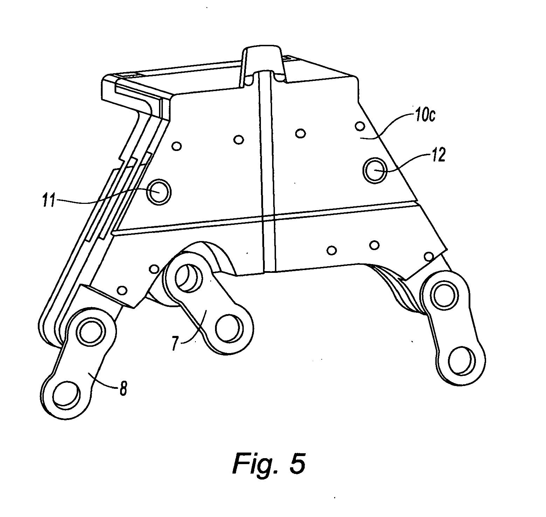

L'invention a consisté à modifier la structure de la poutre 1 pour la rendre souple dans le plan transversal. Cette structure est détaillée sur les figures 2 à 5. On voit sur la figure 2, qui est une coupe de la poutre selon un plan vertical, que celle-ci est constituée d'une pluralité de plaques : des premières plaques 10a, 10b, 10c, 10d, 10 e, et de deuxièmes plaques 20a, 20b, 20c, 20d, 20 e, 20f. Les premières plaques 10 sont imbriquées entre les deuxièmes plaques 20. Un espace est ménagé entre les plaques adjacentes qui est occupé par un matériau élastomère. Il y a autant de couches 30 de matériau élastomère que d'intervalles entre les premières et les deuxièmes plaques 10 et 20. Les couches élastomères adhèrent aux plaques, l'ensemble formant une structure lamifiée. Les premières plaques 10 sont solidaires du dit premier élément de la poutre recevant les moyens de fixation à la structure de l'aéronef, ici la plateforme 2. Les deuxièmes plaques 20 sont solidaires du dit second élément de la poutre recevant les moyens de fixation au turbomoteur, ici les bras 3, 4 et 5.

Dans l'exemple de réalisation représenté sur les figures, chacune des plaques se prolonge de manière à former une partie du premier et du second élément respectivement. Les plaques 10 et 20 sont respectivement liées ensemble par des boulons 13 et 14 que l'on voit représentés sur la figure 1. Ce mode de réalisation n'est cependant pas le seul possible. Les plaques peuvent être par exemple réalisées par usinage de deux blocs. D'autres solutions sont envisageables.

En fonctionnement, les efforts selon les directions OZ et OY sont transmis parallèlement aux plaques à travers les couches élastomères qui sont soumises à des contraintes de cisaillement. Cette disposition évite que le matériau élastomère ne travaille en dépression. La poutre présente une rigidité plus importante selon l'axe du moteur OX. Il est éventuellement possible de précontraindre dans cette direction les couches d'élastomère en comprimant axialement les couches au moment de l'assemblage de la poutre.

On comprend que le nombre de plaques n'est pas limité à celui du mode de réalisation ici illustré. Il dépend de paramètres tels que l'espace disponible pour loger la suspension, la section globale de matériau élastomère actif requise, les efforts que la suspension sera amenée à supporter, l'amortissement des vibrations que l'on souhaite appliquer à la suspension. Le coût de fabrication d'une telle structure est aussi un paramètre pris en compte dans la définition des différents composants de la poutre.

On fabrique cette structure en coulant un élastomère par exemple dans les intervalles entre les plaques de manière à ce qu'il adhère à ces dernières comme cela est connu dans la technique de fabrication des structures lamifiées élastomère métal.

Conformément à une autre caractéristique de l'invention, on incorpore dans la poutre une ou deux tiges axiales 11 ou 12 qui traversent l'ensemble des plaques. Ces tiges sont montées avec jeu dans les plaques 10 et 20. Leur fonction est d'assurer la transmission des efforts selon les directions OZ et OY en cas de déplacement des plaques 10 et 20 les unes par rapport aux autres au-delà d'une limite acceptable, en terme de sécurité notamment, qui est définie par le dit jeu. On peut ne prévoir qu'une seule tige 11 ou 12 si la suspension n'est pas affectée à la reprise des efforts de couple moteur.

Le nombre et la surface des plaques dépendent des efforts que l'on souhaite filtrer ainsi que des charges limites qu'une telle structure est susceptible de supporter.

## Revendications

1. Suspension de turbomoteur à la structure d'un aéronef comprenant une poutre (1) avec un premier élément (2) agencé pour recevoir des moyens de fixation à ladite structure et un second élément (3, 4, 5) traversé par des axes supports de bielles (31, 41, 51) parallèles à un axe (OX) sur lesquels au moins deux bielles (6 et 8) sont articulées chacune par une liaison à rotule de manière à assurer la reprise des efforts dans un plan (OY, OZ) perpendiculaire à l'axe (OX), lesdites bielles formant un moyen de fixation au turbomoteur, **caractérisée par le fait que** la poutre comprend une pluralité de plaques parallèles (10a, 10b etc. ; 20a, 20b etc.) disposées transversalement par rapport à l'axe (OX) et reliées entre elles par adhérisation de couches d'élastomère (30), les plaques étant solidaires alternativement au premier élément (2) et au second élément (3, 4, 5).

2. Suspension selon la revendication précédente dont lesdites plaques sont boulonnées (13, 14) entre elles.

3. Suspension selon l'une des revendications précédentes dont les plaques sont traversées par au moins une tige (11, 12) parallèle à l'axe (OX), un jeu étant ménagé entre les plaques et la tige, la tige assurant la transmission des efforts perpendiculaires à l'axe (OX) quand les premières plaques ont subi un déplacement par rapport aux deuxièmes plaques.

4. Suspension selon l'une des revendications précédentes dont la couche d'élastomère (30) est précontrainte par compression selon l'axe (OX).

5. Turbomoteur comportant une suspension selon les revendications 1 à 4.

6. Turbomoteur selon la revendication précédente dont lesdits axes supports de bielles (31, 41, 51) de la suspension, sont parallèles à l'axe du moteur.

## Claims

1. Suspension of a turbine engine from the structure of an aircraft, comprising a strut (1) with a first element (2) arranged to receive means of fixing to said structure and a second element (3, 4, 5) with link-supporting shafts (31, 41, 51) passing through them parallel to an axis (OX) on which at least two links (6 and 8) are articulated each by a swivel connection so as to absorb the forces in a plane (OY, OZ) perpendicular to the axis (OX), said links forming a means of fixing to the turbine engine, **characterised by** the fact that the strut comprises a plurality of parallel plates (10a, 10b etc; 20a, 20b etc) disposed transversely with respect to the axis (OX) and connected together by adhesion of layers of elastomer (30), the plates being secured alternately to the first element (2) and to the second element (3, 4, 5).

2. Suspension according to the preceding claim, the plates of which are bolted (13, 14) together.

3. Suspension according to one of the preceding claims, the plates of which have at least one rod (11, 12) passing through them parallel to the axis (OX), a clearance being provided between the plates and the rod, the rod transmitting the forces perpendicular to the axis (OX) when the first plates have undergone a movement with respect to the second plates.

4. Suspension according to one of the preceding claims, the elastomer layer (30) of which is prestressed by compression along the axis (OX).

5. Turbine engine comprising a suspension according to claims 1 to 4.

6. Turbine engine according to the preceding claim, wherein said link-supporting shafts (31, 41, 51) of the suspension are parallel to the axis of the engine.

## Patentansprüche

1. Aufhängung eines Turbomotors an der Struktur eines Flugzeugs, umfassend einen Träger (1) mit einem ersten Element (2), das angeordnet ist, um Mittel zur Befestigung an der Struktur aufzunehmen und ein zweites Element (3, 4, 5), das von Pleuelstangen-Trägerachsen (31, 41, 51) parallel zu einer Achse (OX) durchquert wird, auf denen mindestens zwei Pleuelstangen (6 und 8) jeweils durch eine Gelenkverbindung artikuliert sind, um die Aufnahme der Kräfte in einer Ebene (OY, OZ) sicherzustellen, die senkrecht zur Achse (OX) liegt, wobei die Pleuelstangen ein Mittel zur Befestigung an den Turbomotor bilden, **dadurch gekennzeichnet, dass** der Träger eine Vielzahl von parallelen Platten (10a, 10b usw.; 20a, 20b usw.) umfasst, die bezüglich der Achse (OX) quer angebracht sind und untereinander durch Haftung von Elastomerschichten (30) verbunden sind, wobei die Platten abwechselnd mit dem ersten Element (2) und dem zweiten Element (3, 4, 5) fest verbunden sind.

2. Aufhängung nach dem vorhergehenden Anspruch, wobei die Platten untereinander verbolzt sind (13, 14).

3. Aufhängung nach einem der vorhergehenden Ansprüche, wobei die Platten von mindestens einem Schaft (11, 12) parallel zur Achse (OX) durchquert werden, wobei ein Spiel zwischen den Platten und dem Schaft vorhanden ist, wobei der Schaft die Übertragung der Kräfte senkrecht zur Achse (OX) sicherstellt, wenn die ersten Platten bezüglich der zweiten Platten verschoben wurden.

4. Aufhängung nach einem der vorhergehenden Ansprüche, wobei die Elastomerschicht (30) entlang der Achse (OX) durch Kompression vorgespannt ist.

5. Turbomotor, umfassend eine Aufhängung nach den Ansprüchen 1 bis 4.

6. Turbomotor nach dem vorhergehenden Anspruch, wobei die Pleuelstangen-Trägerachsen (31, 41, 51) der Aufhängung parallel zur Achse des Motors sind.
